# EUROPÄISCHE PATENTANMELDUNG

(11) **EP 0 529 471 A1**
(43) Veröffentlichungstag der Anmeldung: **03.03.1993**
(21) Anmeldenummer: 92114035.6
(22) Anmeldetag: 18.08.1992
(51) Int. Cl.: B60T 8/18, B60T 13/26

(54) **Druckluftbetätigte Bremsanlage für druckluftgefederte Mehrachs-Strassenfahrzeuge**

(30) Priorität: 30.08.1991 DE 4128835
(71) Anmelder: Iveco Magirus Aktiengesellschaft, D-89017 Ulm (DE)
(72) Erfinder: Stürner, Johann, 89079 Ulm/Gögglingen (DE)
(74) Vertreter: TER MEER - MÜLLER - STEINMEISTER & PARTNER

(57) **Zusammenfassung**

Bei einer bekannten offenkundig vorbenutzten Bremsanlage für die druckluftgefederten Achsen eines Doppelachsaggregats mit automatischer Achslastverteilung werden die Bremskräfte der Antriebsachse und der Zusatzachse auf die Weise getrennt geregelt, daß sowohl der Antriebsachse als auch der Zusatzachse ein automatischer Bremskraftregler (ALB) zugeordnet ist. Hierdurch ergibt sich jedoch ein relativ hoher Kostenaufwand in apparativer und montagemäßiger Hinsicht.

Bei der Erfindung wird die Antriebsachse in bekannter Weise über einen automatischen Bremskraftregler (ALB) geregelt, welcher von den Luftbälgen dieser Achse angesteuert ist. Die Zusatzachse hingegen wird über ein Relaisventil geregelt, welches von den Luftbälgen dieser Zusatzachse angesteuert ist und somit immer einen der Achslast entsprechenden Bremsdruck ermöglicht. Dadurch ergibt sich eine optimale Regelung der Bremsdrücke beider Achsen und es wird zuverlässig in allen Achslastbereichen ein Blockieren der Räder verhindert. Die Bremsanlage ist dabei besonders kostengünstig und übersichtlich. Sie ermöglicht eine einfache ABS-Regelung sowie eine einfache ABS- + ASR-Regelung.

## Beschreibung

Die Erfindung betrifft eine druckluftbetätigte Bremsanlage für druckluftgefederte Mehrachs-Straßenfahrzeuge, mit einem Doppelachsaggregat bestehend aus einer Antriebsachse und einer Zusatzachse.

Bei bekannten Dreiachsfahrzeugen mit druckluftbetätigten Bremsanlagen und mit automatischer Achslastverteilung wird die Achslastverteilung zwischen der Antriebsachse und Zusatzachse des Doppelachsaggregates über ein Druckregelventil in der Luftfederung automatisch geregelt. Im Teillastbereich wird die gesamte Achslast von der Antriebsachse übernommen. Hat diese annähernd ihren nominellen Wert erreicht, wird die zusätzliche Last auf die Zusatzachse übertragen. Dadurch wird eine entsprechende Bodenhaftung der Antriebsachse gewährleistet und gleichzeitig ein unnötiger Verschleiß der Reifen beider Achsen verhindert. Bedingt durch diese Achslastverteilung stehen die entsprechenden Luftbalgdrücke der zur Steuerung der Bremsdrücke verwendeten Achsen in keinem konstanten Verhältnis zueinander, was zu einem Blockieren der Zusatzachse im Teillastbereich führen kann.

Bei einer bekannten offenkundig vorbenutzten Bremsanlage für die druckluftgefederten Achsen eines Doppelachsaggregats mit automatischer Achslastverteilung werden die Bremskräfte der Antriebsachse und der Zusatzachse auf die Weise getrennt geregelt, daß sowohl der Antriebsachse als auch der Zusatzachse ein automatischer Bremskraftregler (ALB) zugeordnet ist. Hierdurch ergibt sich jedoch ein relativ hoher Kostenaufwand in apparativer und montagemäßiger Hinsicht.

Aufgabe der Erfindung ist die Schaffung einer Bremsanlage der eingangs genannten Art, welche mit Hilfe einfacher Mittel ein Blockieren der Räder des Doppelachsaggregates auch im Teillastbereich zuverlässig verhindert.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 4.

Wesen der Erfindung ist, mit besonders einfachen Mitteln die beiden Achsen des Doppelachsaggregates mit eigenen Bremskreisen auszustatten, die eine eigene achslastbezogene Bremskraftregelung ermöglichen. Die Antriebsachse wird hierbei in bekannter Weise über einen automatischen Bremskraftregler (ALB) geregelt, welcher von den Luftbälgen dieser Achse angesteuert ist. Die Zusatzachse hingegen wird über ein Relaisventil geregelt, welches von Luftbälgen dieser Zusatzachse angesteuert ist und somit immer einen der Achslast entsprechenden Bremsdruck ermöglicht. Dadurch ergibt sich eine optimale Regelung der Bremsdrücke beider Achsen und es wird zuverlässig in allen Achslastbereichen ein Blockieren der Räder verhindert. Die Bremsanlage ist kostengünstig und übersichtlich. Sie ermöglicht eine einfache ABS-Regelung sowie eine einfache ABS- + ASR-Regelung.

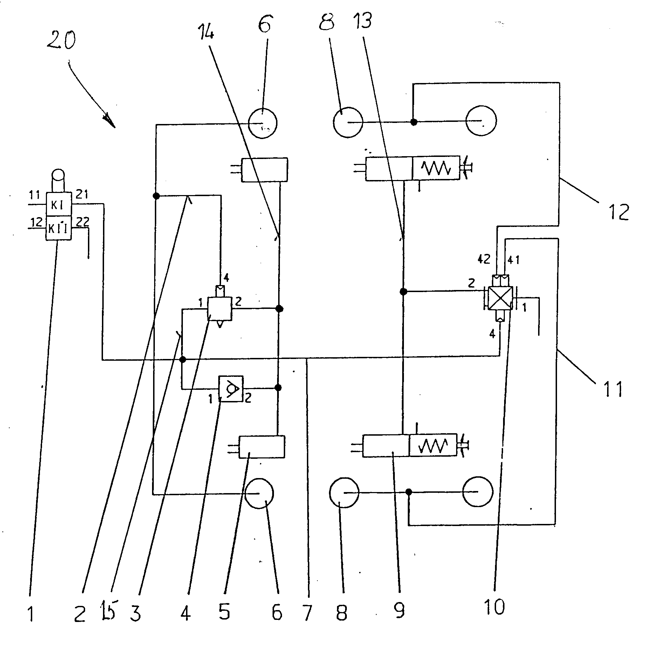

Die Erfindung wird nachfolgend anhand eines Ausführungsbeispiels unter Bezugnahme auf die Zeichnung näher beschrieben, die aus einer einzigen Figur besteht.

Die Zeichnung veranschaulicht schematisch die druckluftbetätigte Bremsanlage eines Doppelachsaggregates bestehend aus einer Antriebsachse und einer nichtangetriebenen Zusatzachse, wobei die Bremskraftregelung über zwei voneinander getrennte Bremskreise erfolgt.

Die Regelung der Antriebsachse erfolgt über einen pneumatischen Bremskraftregler (10). Der über den Anschluß (21) des Motorwagen-Bremsventils (1) der Bremsanlage (20) eingesteuerte Bremsdruck wird über eine Bremsleitung (7) als Steuerdruck am Anschluß (4) des Bremskraftreglers (10) verwendet.

An den Anschlüssen (4.1, 4.2) des Bremskraftreglers (10) steht über Steuerleitungen (11, 12) ein zweiter, der Achslast in den Luftbälgen (8) entsprechender Steuerdruck an, die dieser Antriebsachse zugeordnet sind.

Bei Betätigung der Bremsanlage (20) wird in Abhängigkeit des Steuerdrucks am Anschluß (4) vom Fahrer den Anschlüssen (4.1, 4.2 (entsprechend der Achslast) ein bestimmter Bremsdruck vom Anschluß (1) (Vorrat) am Anschluß (2) des Bremskraftreglers (10) ausgesteuert. Dieser geregelte Bremsdruck wird über die Bremsleitung (13) auf die Bremszylinder (9) der Antriebsachse geleitet und somit eine der Betätigung und der Achslast entsprechende Abbremsung erzielt.

Demgegenüber erfolgt die Regelung des Bremskreises der Zusatzachse über ein Relaisventil (3), das eingangsseitig am Vorratsanschluß (1) über einen Leitungszweig (15) mit der Bremsleitung (7) verbunden ist. Demzufolge steht der über die Bremsleitung (7) vom Motorwagen-Bremsventil (1) kommende Bremsdruck auch am Anschluß (1) des Relaisventils (3) an.

Das Relaisventil (3) wird am Anschluß (4) über eine Steuerleitung (2) vom Balgdruck der Luftbälge (6) der Zusatzachse angesteuert. Der ausgesteuerte Bremsdruck am Anschluß (2) des Relaisventils (3) steht somit im direktem Verhältnis zur Achslast dieser Achse. Die über die Bremsleitung (14) und den Bremszylindern (5) der Zusatzachse erzielte Abbremsung ist auch bei der Zusatzachse den gegebenen Verhältnissen angepaßt. Ein Blockieren der Räder wird somit zuverlässig verhindert.

Im Bremskreis der Zusatzachse ist ferner parallel zum Relaisventil (3) ein Rückschlagventil (4) angeordnet. Das Rückschlagventil befindet sich in einem Leitungszweig zwischen dem Leitungszweig (15) und der Bremsleitung (14). Es öffnet in Richtung des Leitungszweigs (15) bzw. in Richtung der Bremsleitung (7). Das Rückschlagventil (4) ist also als "Bypaß" zwischen den Anschlüssen (1 und 2) des Relaisventils (3) vorgesehen und hat die Aufgabe, einen möglichen Restdruck in den Bremszylindern (5) der Zusatzachse nach Beendigung des Bremsvorgangs abzubauen.

Alle in der Beschreibung erwähnten und/oder in der Zeichnung dargestellten neuen Merkmale sind allein und/oder in Kombination erfindungswesentlich, auch soweit sie in den Ansprüchen nicht ausdrücklich beansprucht sind.

## Patentansprüche

1. Druckluftbetätigte Bremsanlage (20) für druckluftgefederte Mehrachs-Straßenfahrzeuge, mit einem Doppelachsaggregat bestehend aus einer Antriebsachse und einer Zusatzachse, wobei eine getrennte Regelung der Bremskräfte der Antriebsachse und der Zusatzachse vorgesehen ist, indem der Balgdruck der einzelnen Achsen jeweils über eine Steuerleitung (11, 12; 2) zu einem Regelorgan zugeführt wird, welches für die Antriebsachse ein automatischer Bremskraftregler (ALB) (10) ist,
dadurch gekennzeichnet,
daß das Regelorgan für die Zusatzachse ein Relaisventil (3) ist.

2. Bremsanlage nach Anspruch 1,
dadurch gekennzeichnet,
daß der Eingang des Relaisventils (3) über einen Leitungszweig (15) mit einer Bremsleitung (7) verbunden ist, welche an die Ausgangsseite eines Motorwagen-Bremsventils (1) angeschlossen ist.

3. Bremsanlage nach Anspruch 1 oder 2,
dadurch gekennzeichnet,
daß im eigenen Bremskreis der Zusatzachse parallel zum Relaisventil (3) ein Rückschlagventil (4) angeordnet ist.

4. Bremsanlage nach Anspruch 3,
dadurch gekennzeichnet,
daß das Rückschlagventil (4) zwischen der zu den Radbremszylindern (5) führenden Bremsleitung (14) und der zum Bremskraftregler (10) der Antriebsachse führenden Bremsleitung (7) mit Öffnungsmöglichkeit in Richtung der Bremsleitung (7) angeordnet ist.
